# EUROPEAN PATENT APPLICATION

(11) **EP 2 892 257 A1**
(43) Date of publication of application: **08.07.2015**
(21) Application number: 13842332.2
(22) Date of filing: 18.06.2013
(51) Int. Cl.: H04W 4/24

(54) **METHOD, APPARATUS, AND SYSTEM FOR PROCESSING CHARGING INFORMATION**

(30) Priority: 29.09.2012 CN 201210379465
(71) Applicant: Huawei Technologies Co., Ltd., Longgang District Shenzhen, Guangdong 518129 (CN)
(72) Inventor: WU, Xiaobo, Shenzhen Guangdong 518129 (CN); SHU, Lin, Shenzhen Guangdong 518129 (CN); ZHANG, Wanqiang, Shenzhen Guangdong 518129 (CN); SHI, Shufeng, Shenzhen Guangdong 518129 (CN)
(74) Representative: Pfenning, Meinig & Partner GbR
(86) International application number: PCT/CN2013/077360
(87) International publication number: WO 2014/048139

(57) **Abstract**

Embodiments of the present invention provide a charging information processing method, apparatus, and system, where the method includes: receiving, by a charging data record information generating device of a first network, an identifier of a second network to which a mobility management device belongs, where the first network and the second network are different networks; generating, by the charging data record information generating device, user charging data record information, where the user charging data record information includes the identifier of the second network, so that a charging device performs inter-network cost settlement between the second network to which the mobility management device belongs and the first network according to the user charging data record information. In this way, inter-network cost settlement between different network operators can be implemented.

## Description

### CROSS-REFERENCE TO RELATED APPLICATION

This application claims priority to Chinese Patent Application No. 201210379465.3, filed with the Chinese Patent Office on September 29, 2012 and entitled "CHARGING INFORMATION PROCESSING METHOD, APPARATUS, AND SYSTEM", which is incorporated herein by reference in its entirety.

### TECHNICAL FIELD

The present invention relates to a wireless network communication technology, and in particular, to a charging information processing method, apparatus, and system.

### BACKGROUND

To reduce an operator's cost in deploying a radio access network, the 3GPP provides a network sharing idea, that is, a public land mobile network (Public Land Mobile Network, PLMN) of multiple operators or multiple PLMNs of one operator can share a same radio access network to provide radio communication services. For example, the 3GPP provides a circuit switched fallback (CS Fallback, CSFB) technology and an SMS over SGs (SMS over SGs) technology.

The following uses the CSFB technology as an example for description. In a process of executing a joint attachment or a tracking area update (Tracking Area Update, TAU) by a user equipment (User Equipment, UE) on a long term evolution (Long Term Evolution, LTE) network, a mobility management entity (Mobility Management Entity, MME) carries only a PLMN identifier of a current serving node in a create session request Create Session Request or a modify bearer request Modify Bearer Request or other request messages to a serving gateway/packet data network gateway (Service Gateway/Packet Data Net Gateway, SGW/PGW); when the PLMN identifier of the current serving network is the same as a PLMN identifier corresponding to a network name displayed by the user equipment, no charging problem occurs between operators.

However, when the PLMN identifier of the current serving network is different from the PLMN identifier corresponding to the network name displayed by the user equipment, because user charging data record information generated by a current charging data record information generating device includes only the PLMN identifier of the current serving node, an operator of a PS network to which the MME belongs, an operator of the current serving node, and an operator to which the user equipment belongs cannot perform inter-network cost settlement, and in particular, the operator of the PS network to which the MME belongs that provides a network sharing service for the user equipment and the operator to which the user equipment belongs cannot obtain their due benefits according to the existing user charging data record information.

Therefore, when a radio access network is shared, inter-network cost settlement between different network operators cannot be performed based on user charging data record information generated by an existing charging data record information generating device, which may cause losses of benefits of some operators.

### SUMMARY

In view of this, embodiments of the present invention provide a charging information processing method, apparatus, and system, which can solve a problem that inter-network cost settlement between different network operators cannot be performed based on user charging data record information generated by an existing charging data record information generating device.

According to a first aspect, an embodiment of the present invention provides a charging information processing method, including:
receiving, by a charging data record information generating device of a first network, an identifier of a second network to which a mobility management device belongs, where the first network and the second network are different networks; and
generating, by the charging data record information generating device, user charging data record information, where the user charging data record information includes the identifier of the second network.

With reference to the first aspect, in a first possible implementation manner, the receiving, by a charging data record information generating device, an identifier of at second network to which a mobility management device belongs includes:
receiving, by the charging data record information generating device, a request message sent by the mobility management device, where the request message includes the identifier of the second network to which the mobility management device belongs.

The request message includes at least one of a location update request message, a service request message, a create session request message, and a modify bearer request message.

The identifier of the second network includes at least one of a PLMN identifier of the second network, a cell identifier of the second network, and an identifier of the mobility management device.

The charging data record information generating device includes at least one of a mobile service switching center server MSC Server, a serving general packet radio service support node SGSN, a gateway general packet radio service support node GGSN, a serving gateway SGW, a packet data network gateway PGW, and a mobility management entity MME.

The mobility management device includes at least one of a mobility management entity MME and a serving general packet radio service support node SGSN.

According to a second aspect, an embodiment of the present invention provides a charging data record information generating device located on a first network, including:
a receiving module, configured to receive an identifier of a second network to which a mobility management device belongs, where the first network and the second network are different networks; and
a user charging data record information generating module, configured to generate user charging data record information according to the identifier of the second network received by the receiving module, where the user charging data record information includes the identifier of the second network.

With reference to the second aspect, in a first possible implementation manner, the receiving module is specifically configured to receive a request message sent by the mobility management device, where the request message includes the identifier of the second network to which the mobility management device belongs.

The request message includes at least one of a location update request message, a service request message, a create session request message, and a modify bearer request.

The identifier of the second network includes at least one of a PLMN identifier of the second network, a cell identifier of the second network, and an identifier of the mobility management device.

The charging data record information generating device includes at least one of a mobile service switching center server MSC Server, a serving general packet radio service support node SGSN, a gateway general packet radio service support node GGSN, a serving gateway SGW, a packet data network gateway PGW, and a mobility management entity MME.

According to a third aspect, an embodiment of the present invention provides a charging information processing method, including:
obtaining, according to user charging data record information, an identifier of a second network to which a mobility management device belongs included in the user charging data record information, where the user charging data record information is generated by a charging data record information generating device of a first network according to the identifier of the second network to which the mobility management device belongs, where the first network and the second network are different networks; and
generating operator network cost information according to the identifier of the second network and an identifier of the first network.

The operator network cost information is used to instruct a home public land mobile network HPLMN operator of a user to pay an operator corresponding to the first network and an operator of the second network to which the mobility management device belongs respectively.

The identifier of the second network includes at least one of a PLMN identifier of the second network, a cell identifier of the second network, and an identifier of the mobility management device.

According to a fourth aspect, an embodiment of the present invention provides a charging device, including:
an obtaining module, configured to obtain, according to user charging data record information, an identifier of a second network to which a mobility management device belongs included in the user charging data record information, where the user charging data record information is generated by a charging data record information generating device of a first network according to the identifier of the second network to which the mobility management device belongs, where the first network and the second network are different networks; and
an operator network cost information generating module, configured to generate operator network cost information according to the identifier of the second network to which the mobility management device belongs, which is obtained by the obtaining module and an identifier of the first network.

The operator network cost information is used to instruct a home public land mobile network HPLMN operator of a user to pay an operator corresponding to the first network and an operator of the second network to which the mobility management device belongs respectively.

The identifier of the second network includes at least one of a PLMN identifier of the second network, a cell identifier of the second network, and an identifier of the mobility management device.

According to a fifth aspect, an embodiment of the present invention provides a charging information processing system, including the charging data record information generating device and the charging device.

In the embodiments of the present invention, a charging data record information generating device of a first network adds an identifier of a second network to which a mobility management device belongs to user charging data record information, and sends the user charging data record information to a charging device, so that the charging device can perform inter-network cost settlement between the second network to which the mobility management device belongs and a current serving first network according to the user charging data record information that includes the identifier of the second network to which the mobility management device belongs. This solves a problem that, when a radio access network is shared, inter-network cost settlement between different network operators cannot be performed based on user charging data record information generated by an existing charging data record information generating device and does not include the identifier of the second network to which the mobility management device belongs, and losses of benefits of some operators may be caused.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a schematic flowchart of a charging information processing method according to an embodiment of the present invention;
FIG. 2 is a schematic structural diagram of a charging data record information generating device according to another embodiment of the present invention;
FIG. 3 is a schematic flowchart of a charging information processing method according to another embodiment of the present invention;
FIG. 4 is a schematic structural diagram of a charging device according to another embodiment of the present invention; and
FIG. 5 is a schematic flowchart of a charging information processing system according to another embodiment of the present invention.

### DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

The technical solution of the present invention can be applied to various wireless communication systems. A first network and a second network mentioned in each of the following embodiments, for example, include a global system for mobile communications (Global System for Mobile Communications, GSM for short), a general packet radio service (General Packet Radio Service, GPRS for short) system, a code division multiple access (Code Division Multiple Access, CDMA for short) system, a CDMA 2000 system, a wideband code division multiple access (Wideband Code Division Multiple Access, WCDMA for short) system, a long term evolution (Long Term Evolution, LTE for short) system or a world interoperability for microwave access (World Interoperability for Microwave Access, WiMAX for short) system, and the like.

In the technical solution of the present invention, a charging data record information generating device may include but not limited to a mobile switching center/visitor location register (Mobile Switching Center/Visitor Location Register, MSC/VLR), a serving gateway/packet data network gateway (Service Gateway/Packet Data Net Gateway, SGW/PGW), a serving GPRS support node (Serving GPRS Support Node, SGSN), a gateway general packet radio service support node (Gateway GPRS Support Node, GGSN), where the MSC/VLR may be a single radio voice call continuity (Single Radio Voice Call Continuity, SRVCC) MSC/VLR or be a CSFB MSC/VLR.

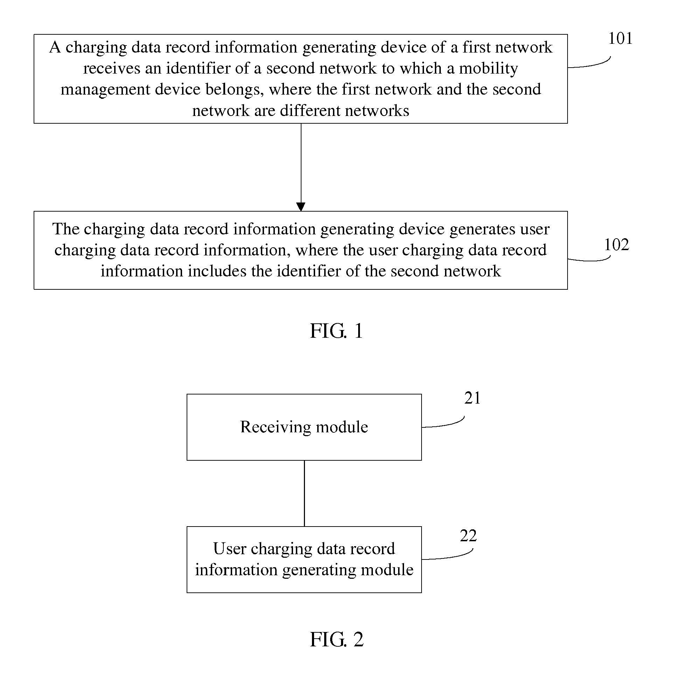

FIG. 1 is a schematic flowchart of a charging information processing method according to an embodiment of the present invention. As shown in FIG. 1, the charging method of this embodiment may include:
101. A charging data record information generating device of a first network receives an identifier of a second network to which a mobility management device belongs, where the first network and the second network are different networks.

An identifier of the first network includes but not limited to a public land mobile network PLMN identifier of the first network, and the identifier of the second network includes but not limited to a PLMN identifier of the second network.

For example, the identifier of the second network to which the mobility management device belongs includes at least one of an E-UTRAN cell global identifier (E-UTRAN Cell Global Identification, ECGI) of an LTE network where the mobility management device is located, a PLMN identifier of an LTE network where the mobility management device is located, an identifier of the mobility management device and a PLMN identifier of a 2/3G network where the mobility management device is located.

In an implementation manner of the present invention, the charging data record information generating device may further receive a PLMN identifier corresponding to a network name displayed by a user equipment. For example, after the user equipment is successfully registered to a network of an operator, the user equipment should display the registered network name to a user, where the network name displayed by the user equipment may be displayed according to a network name sent by the mobility management device (for example, an MME) or according to configurations of the user equipment.

For example, the MME carries, according to an LTE PLMN identifier or a CS PLMN identifier, a corresponding network name in mobility management information, and sends the mobility management information to the user equipment, and the user equipment displays the network name to the user according to the received network name. The PLMN identifier corresponding to the network name displayed by the user equipment is a PLMN identifier (that is, LTE PLMN ID) of a PS network to which the MME belongs, or the PLMN identifier corresponding to the network name displayed by the user equipment is a PLMN identifier (that is, CS PLMN ID) of a CS network where the MME is registered through a mobile service switching center (Mobile-services Switching Centre, MSC) or a visitor location register (Visitors Location Register, VLR).

The MME may determine, according to the PLMN identifier corresponding to the network name carried in the mobility management information sent to the user equipment, the PLMN identifier as a PLMN identifier corresponding to the network name displayed by the user equipment. Alternatively, the MME does not send the mobility management information to the user equipment, and the user equipment displays a network name according to configurations of the user equipment. In this case, the MME also determines, according to the network name configured by the user equipment, the PLMN identifier corresponding to the network name as a PLMN identifier corresponding to the network name displayed by the user equipment.

In an optional implementation manner of this embodiment, the charging data record information generating device receives a request message sent by the mobility management device, where the request message includes the identifier of the second network to which the mobility management device belongs.

It should be noted that the request message sent by the mobility management device and received by the charging data record information generating device may further carry the PLMN identifier corresponding to the network name displayed by the user equipment and the network name displayed by the user equipment.

It should be noted that the request message includes but not limited to a location update request message, a service request message, a create session request message, or a modify bearer request.

For example, when the user equipment executes a joint attachment/joint location update in the CSFB, the MME may carry the PLMN identifier corresponding to the network name displayed by the user equipment and/or an identifier of a network to which the MME belongs in a location update request message Location Update Request sent to the MSC/VLR, where the identifier of the network to which the MME belongs, for example, includes an ECGI of an LTE network where the MME is located and/or a PLMN identifier of the LTE network where the MME is located and/or the MME identifier; and the location update request message may further carry the network name displayed by the user equipment.

For another example, when the user equipment executes a CSFB voice called process, the MME may carry the PLMN identifier corresponding to the network name displayed by the user equipment and/or an identifier of a network to which the MME belongs in a service request message Service Request sent to the MSC VLR, where the identifier of the network to which the MME belongs, for example, includes an ECGI of an LTE network where the MME is located and/or a PLMN identifier of the LTE network where the MME is located and/or the MME identifier; and the service request message Service Request may further carry the network name displayed by the user equipment.

For another example, when the user equipment executes a CSFB voice calling process, the MME may carry the PLMN identifier corresponding to the network name displayed by the user equipment and/or an identifier of a network to which the MME belongs in a service request message Service Request or another request message sent to the MSC VLR, where the identifier of the network to which the MME belongs, for example, includes an ECGI of an LTE network where the MME is located and/or a PLMN identifier of the LTE network where the MME is located and/or the MME identifier; and the service request message Service Request or another request message may further carry the network name displayed by the user equipment.

For another example, when the user equipment executes a CSFB short message originating and terminated process, the MME may carry the PLMN identifier corresponding to the network name displayed by the user equipment and/or an identifier of a network to which the MME belongs in an uplink unit data Uplink Unit data or a service request message Service Request sent to the MSC VLR, where the identifier of the network to which the MME belongs, for example, includes an ECGI of an LTE network where the MME is located and/or a PLMN identifier of the LTE network where the MME is located and/or the MME identifier; and the uplink unit data Uplink Unit data or the service request message Service Request may further carry the network name displayed by the user equipment.

For another example, when the UE user equipment executes a joint attachment or a joint location update process on an LTE network, the MME may carry the PLMN identifier corresponding to the network name displayed by the user equipment and/or an identifier of a network to which the MME belongs in a create session request message Create Session Request or a modify bearer request Modify Bearer Request or another request message sent to the SGW, where the identifier of the network to which the MME belongs, for example, includes an ECGI of an LTE network where the MME is located and/or a PLMN identifier of the LTE network where the MME is located and/or the MME identifier; and the create session request message Create Session Request or the modify bearer request Modify Bearer Request or another request message may further carry the network name displayed by the user equipment.

The SGW sends, to a PGW, the create session request message Create Session Request or the modify bearer request Modify Bearer Request user equipment or another request message that carries the PLMN identifier corresponding to the network name displayed by the user equipment and the PLMN identifier of the network to which the MME belongs.

For another example, when the user equipment has implemented a VoIP voice service on an LTE network, if the user equipment hands over from the voice service to another PS domain, for example, a high speed uplink packet access technology (High Speed Uplink Packet Access, HSUPA), the MME carries the PLMN identifier corresponding to the network name displayed by the user equipment and an identifier of a network to which the MME belongs in a handover message sent to a SGSN; the SGSN carries the PLMN identifier corresponding to the network name displayed by the user equipment and/or an identifier of the network to which the MME belongs in a create session request massage Create Session Request or a modify bearer request message Modify Bearer Request or another request message sent to an SGW/PGW or a GGSN, where the identifier of the network to which the MME belongs, for example, includes an ECGI of an LTE network where the MME is located or a PLMN identifier of the LTE network where the MME is located and/or the MME identifier; and the create session request message Create Session Request or the modify bearer request Modify Bearer Request or another request message may further carry the network name displayed by the user equipment.

For another example, when the user equipment has implemented a VoIP voice service on a 3G network (for example, an HSUPA network), the user equipment executes an LTE packet switched (Packet Switched, PS) handover (Handover, HO) to hand over to the LTE. During the handover, the MME identifies the VoIP service, and carries the PLMN identifier corresponding to the network name displayed by the user equipment and an identifier of a network to which the MME belongs in a create session request message Create Session Request or a modify bearer request Modify Bearer Request or another request message sent to an SGW. The PLMN identifier corresponding to the network name displayed by the user equipment is a PLMN ID corresponding to the 3G network; the SGW sends a create session request message Create Session Request or a modify bearer request Modify Bearer Request or another request message to a PGW, where the create session request or the modify bearer request carries the PLMN identifier corresponding to the network name displayed by the user equipment and/or an identifier of a network to which the MME belongs, where the identifier of the network to which the MME belongs, for example, includes an ECGI of an LTE network where the MME is located and/or a PLMN identifier of the LTE network where the MME is located or the MME identifier; and the create session request Create Session Request or the modify bearer request Modify Bearer Request or another request message may further carry the network name displayed by the user equipment.

For another example, when the user equipment has implemented a VoIP voice service on an LTE network, the user equipment executes a single radio voice call continuity (Single Radio Voice Call Continuity, SRVCC) and hands over to a 2/3G CS domain. The SGSN/MME may carry the PLMN identifier corresponding to the network name displayed by the user equipment and/or an identifier of a network to which the MME belongs in a PS to CS handover message sent to the MSC VLR, where the identifier of the network to which the MME belongs, for example, includes an ECGI of an LTE where the MME is located and/or a PLMN identifier of the LTE network where the MME is located and/or the MME identifier; and the PS to CS handover message may further carry the network name displayed by the user equipment.

For another example, when the user equipment implements a CS voice service on a 2/3G network, the user equipment determines, according to the network name displayed by the current user equipment, a network where the user equipment currently resides or that serves the user equipment. When the user equipment needs to implement a reverse single radio voice call continuity (Reverse Single Radio Voice Call Continuity, SRVCC) in a process of executing a voice service contact, the user equipment hands over to an LTE or a 3G (HSPA) network. The MSC VLR carries the PLMN identifier corresponding to the network name displayed by the user equipment and/or an identifier of a network to which the MME belongs in a CS to PS handover message sent to the SGSN/MME, where the identifier of the network to which the MME belongs, for example, includes an ECGI of an LTE where the MME is located and/or a PLMN identifier of the LTE network where the MME is located and/or the MME identifier; and the CS to PS handover message may further carry the network name displayed by the user equipment.

For another example, when the user equipment implements a CS voice service on a 2/3G network, the user equipment determines, according to the network name displayed by the current user equipment, a network where the user equipment currently resides or that serves the user equipment. In this case, the network name displayed by the user equipment may be a network name of the 2G/3G network. When the user equipment needs to implement a circuit switched handover (CS Handover) in a process of executing a voice service contact, the user equipment hands over to another 2G/3G network. The MSC VLR carries the PLMN identifier corresponding to the network name displayed by the user equipment and/or an identifier of a network to which the MME belongs in a CS to CS handover message sent to the MSC VLR, where the identifier of the network to which the MME belongs, for example, includes an ECGI of an LTE where the MME is located and/or a PLMN identifier of the LTE network where the MME is located and/or the MME identifier; and the CS to CS handover message may further carry the network name displayed by the user equipment.

It should be noted that the specific implementation of carrying the PLMN identifier corresponding to the network name displayed by the user equipment and/or an identifier of a network to which the MME belongs by the mobility management device in a request message sent to the charging data record information generating device may be as follows: adding a new information unit to the request message, where the new information unit is specifically configured to store the PLMN identifier corresponding to the network name displayed by the user equipment and/or the identifier of the network to which the MME belongs, or modifying the PLMN identifier of the serving node in the existing request message as the PLMN identifier corresponding to the network name displayed by the user equipment and a PLMN identifier of the network to which the MME belongs.

It should be noted that the mobility management device may send PLMN identifier information to the charging data record information generating device individually, where the PLMN identifier information includes the PLMN identifier corresponding to the network name displayed by the user equipment and/or an identifier of a network to which the MME belongs. The identifier of the network to which the MME belongs, for example, includes an ECGI of an LTE network where the MME is located and/or a PLMN identifier of the LTE network where the MME is located and/or the MME identifier; and the PLMN identifier information may further carry the network name displayed by the user equipment.

In an optional implementation manner of this embodiment, the charging data record information generating device may send a request message for obtaining the identifier of the second network to which the mobility management device belongs to the mobility management device, and receive a response message that includes the identifier of the second network to which the mobility management device belongs and is returned by the mobility management device.

102. The charging data record information generating device generates user charging data record information, where the user charging data record information includes the identifier of the second network.

It should be noted that in actual applications, the user charging data record information may further include a service type, for example, a CSFB (CS Fallback, circuit switched fallback) indication, which is used to indicate that the user charging data record is triggered by the CSFB. Further, the user charging data record information may further include an E-UTRAN cell global identifier (E-UTRAN Cell Global Identification, ECGI) used to identify a cell globally. For example, a charging system may perform location charging according to the ECGI information.

In actual applications, generally, the user charging data record information generated by the charging data record information generating device further includes an identifier of a current serving first network.

In actual applications, the charging data record information generating device may send the user charging data record information to a charging device, so that the charging device performs inter-network cost settlement between the second network to which the mobility management device belongs and the current serving first network according to the identifier of the second network to which the mobility management device belongs. During the specific implementation, for example, a home PLMN (Home PLMN, HPLMN) of a user may pay an operator corresponding to the current serving first network (for example, an operator corresponding to the PGW/GGSN PLMN) and an operator of the second network to which the mobility management device belongs (for example, an operator of a network corresponding to the PLMN identifier of the LTE network where the MME is located) respectively.

In addition, the MSC may collect statistics according to the ECGI reported by the MME and CS cells where the user equipment is located, for example, collect statistics of which user equipment residing in an ECGI cell falls back in these CS cells.

It should be noted that the foregoing charging data record information generating device may include but not limited to a mobile switching center/visitor location register (Mobile Switching Center/Visitor Location Register, MSC/VLR), a serving gateway/packet data network gateway (Service Gateway/Packet Data Net Gateway, SGW/PGW), a serving GPRS support node (Serving GPRS Support Node, SGSN), a gateway general packet radio service support node (Gateway GPRS Support Node, GGSN), where the MSC/VLR may be a single radio voice call continuity (Single Radio Voice Call Continuity, SRVCC) MSC/VLR or be a CSFB MSC/VLR.

It should be noted that during the implementation of a CSFB service, the MME may also generate user charging data record information, where the user charging data record information includes an identifier of a network to which the MME belongs; the MME sends the user charging data record information to the charging device; the charging device performs inter-network cost settlement between the operator corresponding to the network to which the MME belongs and the operator corresponding to the current serving network according to the identifier of the network to which the MME belongs.

It should be noted that in actual applications, in addition to the identifier of the network to which the MME belongs, the user charging data record information may further include a CSFB type and/or an ECGI of an LTE network where the MME is located and/or a PLMN identifier of the LTE network where the MME is located and/or the MME identifier and/or a third network name displayed by the user equipment.

For example, the MME may output a CSFB event charging data record. In this case, the MME may carry a PLMN identifier corresponding to the third network name displayed by the user equipment in a request message, and send the request message to the MSC VLR, or may not carry a PLMN identifier corresponding to the third network name displayed by the user equipment in a request message, and not send the request message the MSC VLR. The foregoing CSFB service includes a CSFB voice service, a CSFB location control service (Location Control Service, LCS) service, a CSFB call independent supplementary service (Call Independent Supplementary Service, CISS) service, and a CSFB short messaging service. In particular, the CSFB in this embodiment includes an LTE->2/3G CSFB and an LTE→1xRTT (1x single-carrier radio transmission technology (Single-carrier Radio Transmission Technology)) CSFB.

It should be noted that the foregoing mobility management device includes at least one of the MME and the SGSN.

In the embodiment of the present invention, a charging data record information generating device adds an identifier of a second network to which a mobility management device belongs to user charging data record information, and sends the user charging data record information to a charging device, so that the charging device can perform inter-network cost settlement between the second network to which the mobility management device belongs and a current serving first network according to the user charging data record information that includes the identifier of the second network to which the mobility management device belongs. This solves a problem that, when a radio access network is shared, inter-network cost settlement between different network operators cannot be performed based on user charging data record information generated by an existing charging data record information generating device and does not include the identifier of the second network to which the mobility management device belongs, and losses of benefits of some operators may be caused.

FIG. 2 is a schematic structural diagram of a charging data record information generating device according to another embodiment of the present invention. As shown in FIG. 2, the charging data record information generating device includes:
a receiving module 21, configured to receive an identifier of a second network to which a mobility management device belongs; and
a user charging data record information generating module 22, configured to generate user charging data record information according to the identifier of the second network to which the mobility management device belongs received by the receiving module, where the user charging data record information includes the identifier of the second network to which the mobility management device belongs.

The first network and the second network are different networks. An identifier of the first network includes but not limited to a public land mobile network PLMN identifier of the first network, and the identifier of the second network includes but not limited to a PLMN identifier of the second network.

In an implementation manner of the present invention, the receiving module 21 is specifically configured to receive a request message sent by the mobility management device, where the request message includes the identifier of the second network to which the mobility management device belongs.

It should be noted that the foregoing request message includes at least one of a location update request message, a service request message, a create session request message, and a modify bearer request.

It should be noted that the foregoing charging data record information generating device includes at least one of a mobile service switching center server MSC Server, a serving general packet radio service support node SGSN, a gateway general packet radio service support node GGSN, a serving gateway SGW, a packet data network gateway PGW, and a mobility management entity MME.

In the embodiment of the present invention, a charging data record information generating device adds an identifier of a second network to which a mobility management device belongs to user charging data record information, and sends the user charging data record information to a charging device, so that the charging device can perform inter-network cost settlement between the second network to which the mobility management device belongs and a current serving first network according to the user charging data record information that includes the identifier of the second network to which the mobility management device belongs. This solves a problem that, when a radio access network is shared, inter-network cost settlement between different network operators cannot be performed based on user charging data record information generated by an existing charging data record information generating device and does not include the identifier of the second network to which the mobility management device belongs, and losses of benefits of some operators may be caused.

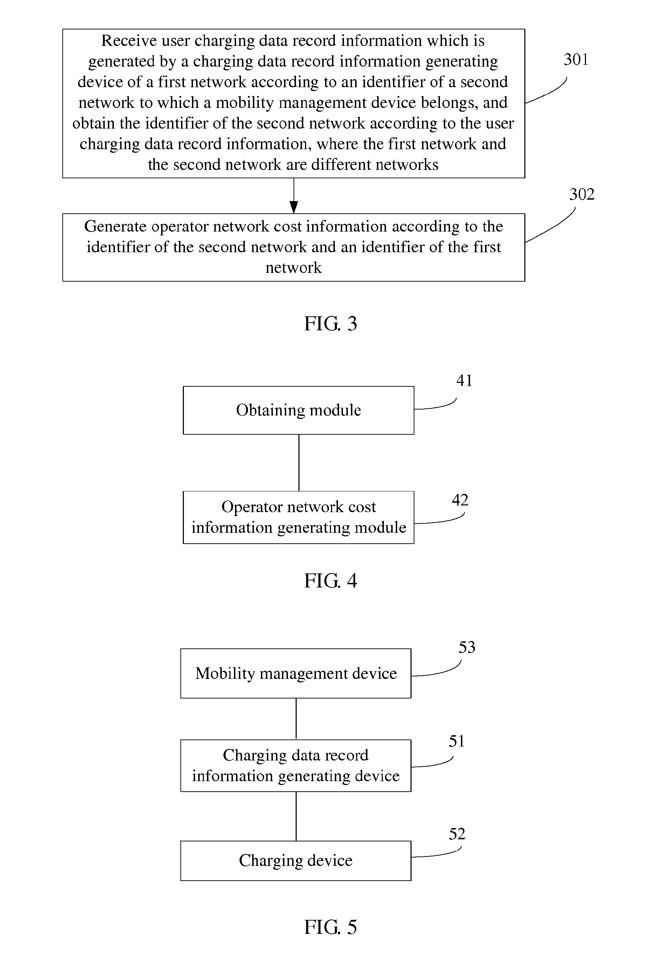

FIG. 3 is a schematic flowchart of a charging information processing method according to another embodiment of the present invention. As shown in FIG. 3, the method includes:
301. Receive user charging data record information which is generated by a charging data record information generating device of a first network according to an identifier of a second network to which a mobility management device belongs, and obtain the identifier of the second network according to the user charging data record information, where the first network and the second network are different networks.

An identifier of the first network includes but not limited to a public land mobile network PLMN identifier of the first network, and the identifier of the second network includes but not limited to a PLMN identifier of the second network.

In an implementation manner of the present invention, the foregoing charging data record information generating device may send the generated user charging data record information to a charging device, or the charging device may send a request message for obtaining user charging data record information to the charging data record information generating device, and the charging data record information generating device sends the generated user charging data record information to the charging device.

302. Generate operator network cost information according to the identifier of the second network and an identifier of the first network.

It should be noted that in actual applications, in addition to the identifier of the second network to which the mobility management device belongs, the user charging data record information generated by the charging data record information generating device, for example, further includes an identifier of a current serving first network.

Correspondingly, the charging device generates operator network cost information according to the identifier of the second network to which the mobility management device belongs and the identifier of the current serving first network included in the user charging data record information. The operator network cost information is used to instruct a home public land mobile network HPLMN operator of a user to pay an operator corresponding to the current serving first network and an operator of the second network to which the mobility management device belongs respectively. During the specific implementation, for example, a home PLMN (Home PLMN, HPLMN) operator of a user may pay an operator corresponding to the current serving first network (for example, an operator corresponding to the PGW/GGSN PLMN) and an operator of the second network to which the mobility management device belongs (for example, an operator of a network corresponding to the PLMN identifier of the LTE network where the MME is located) respectively.

It should be noted that in actual applications, the MSC may collect statistics according to the ECGI reported by the MME and CS cells where the user equipment is located, for example, collect statistics of which user equipment residing in an ECGI cell falls back in these CS cells.

It should be noted that in actual applications, in addition to the identifier of the network to which the MME belongs, the user charging data record information may further include a CSFB type and/or an ECGI of an LTE network where the MME is located and/or a PLMN identifier of the LTE network where the MME is located and/or the MME identifier and/or a third network name displayed by the user equipment.

It should be noted that in actual applications, the user charging data record information may further include a service type, for example, a CSFB (CS Fallback, circuit switched fallback) indication, which is used to indicate that the user charging data record is triggered by the CSFB. Further, the user charging data record information may further include an E-UTRAN cell global identifier ECGI used to identify a cell globally. For example, a charging system may perform location charging according to the ECGI information.

In the embodiment of the present invention, a charging data record information generating device adds an identifier of a second network to which a mobility management device belongs to user charging data record information, and sends the user charging data record information to a charging device, so that the charging device can perform inter-network cost settlement between the second network to which the mobility management device belongs and a current serving first network according to the user charging data record information that includes the identifier of the second network to which the mobility management device belongs. This solves a problem that, when a radio access network is shared, inter-network cost settlement between different network operators cannot be performed based on user charging data record information generated by an existing charging data record information generating device and does not include the identifier of the second network to which the mobility management device belongs, and losses of benefits of some operators may be caused.

FIG. 4 is a schematic structural diagram of a charging device according to another embodiment of the present invention. As shown in FIG. 4, the charging device includes:
an obtaining module 41, configured to receive user charging data record information which is generated by a charging data record information generating device of a first network according to an identifier of a second network to which a mobility management device belongs, and obtain, according to the user charging data record information, an identifier of the second network included in the user charging data record information, where the first network and the second network are different networks; and
an operator network cost information generating module 42, configured to: based on the identifier of the second network to which the mobility management device belongs, which is obtained by the obtaining module, generate operator network cost information according to the identifier of the second network to which the mobility management device belongs, which is obtained by the obtaining module and an identifier of the first network.

The operator network cost information is used to instruct a home public land mobile network HPLMN operator of a user to pay an operator corresponding to the first network and an operator of the second network to which the mobility management device belongs respectively.

The identifier of the first network includes but not limited to a public land mobile network PLMN identifier of the first network, and the identifier of the second network includes but not limited to a PLMN identifier of the second network.

In the embodiment of the present invention, a charging data record information generating device adds an identifier of a second network to which a mobility management device belongs to user charging data record information, and sends the user charging data record information to a charging device, so that the charging device can perform inter-network cost settlement between the second network to which the mobility management device belongs and a current serving first network according to the user charging data record information that includes the identifier of the second network to which the mobility management device belongs. This solves a problem that, when a radio access network is shared, inter-network cost settlement between different network operators cannot be performed based on user charging data record information generated by an existing charging data record information generating device and does not include the identifier of the second network to which the mobility management device belongs, and losses of benefits of some operators may be caused.

FIG. 5 is a schematic structural diagram of a charging information processing system according to another embodiment of the present invention. As shown in FIG. 5, the charging information processing system includes the charging data record information generating device 51 in the apparatus embodiment shown in FIG. 2 and the charging device 52 in the apparatus embodiment shown in FIG. 4.

For related content of the charging data record information generating device 51, reference may be made to the related descriptions in the embodiment corresponding to FIG. 2. For related content of the charging device 52, reference may be made to the detailed descriptions in the embodiment corresponding to FIG. 4, which are not further described herein.

The system further includes:
a mobility management device 53, configured to send a request message to the charging data record information generating device, where the request message includes an identifier of a second network to which the mobility management device belongs.

In the embodiment of the present invention, a charging data record information generating device adds an identifier of a second network to which a mobility management device belongs to user charging data record information, and sends the user charging data record information to a charging device, so that the charging device can perform inter-network cost settlement between the second network to which the mobility management device belongs and a current serving first network according to the user charging data record information that includes the identifier of the second network to which the mobility management device belongs. This solves a problem that, when a radio access network is shared, inter-network cost settlement between different network operators cannot be performed based on user charging data record information generated by an existing charging data record information generating device and does not include the identifier of the second network to which the mobility management device belongs, and losses of benefits of some operators may be caused.

Persons skilled in the art can clearly understand that the foregoing embodiments are applicable to mutual operations between LTE and 1xRTT, for example, 1xCSFB andlxSRVCC.

In addition, in a CSFB scenario, because the user equipment may fall back in any available CS network to initiate a CSFB service, an optional solution is that the network notifies a charging interval to the user equipment, and the user equipment displays the charging information to the user. For example, the voice tariff is 1 to 10 yuan per minute. In addition, the user equipment may display an LTE operator network name and a 2G/3G CS operator network name concurrently (for example, when no network indication is received). The network name of the 2/3G CS operator may be a network name of a CS network operator corresponding to the MSC/VLR which is selected by the MME in a process of executing a joint attachment or a location update by the user equipment, or be a network name of another CS network operator. Further, the user equipment may display network names of two or more CS network operators concurrently.

Optionally, in a CSFB service process, if the user equipment finds that the PLMN is changed, that is, the PLMN of the LTE network is different from the PLMN of a fallen back 2G/3G CS network, the user equipment notifies this change to the user. For example, the user equipment prompts the user by words or voice.

Another embodiment of the present invention provides a charging data record information generating device which is located on a first network and includes a processor. When the processor runs, the processor executes the following steps:
receiving an identifier of a second network to which a mobility management device belongs; and
generating user charging data record information, where the user charging data record information includes the identifier of the second network to which the mobility management device belongs.

During the specific implementation, the receiving an identifier of a second network to which a mobility management device belongs includes:
receiving a request message sent by the mobility management device, where the request message includes the identifier of the second network to which the mobility management device belongs.

The request message includes at least one of a location update request message, a service request message, a create session request message, and a modify bearer request.

The first network and the second network are different networks. An identifier of the first network includes but not limited to a public land mobile network PLMN identifier of the first network, and the identifier of the second network includes but not limited to a PLMN identifier of the second network.

The charging data record information generating device includes at least one of a mobile service switching center server MSC Server, a serving general packet radio service support node SGSN, a gateway general packet radio service support node GGSN, a serving gateway SGW, a packet data network gateway PGW, and a mobility management entity MME.

The mobility management device includes at least one of a mobility management entity MME and a serving general packet radio service support node SGSN.

Specifically, the charging data record information generating device further includes components such as a memory, a bus, and a hard disk in addition to the processor, where the processor is respectively connected to the memory and the hard disk through the bus.

Another embodiment of the present invention provides a charging device, including a processor. When the processor runs, the processor executes the following steps:
obtaining, according to user charging data record information, an identifier of a second network to which a mobility management device belongs included in the user charging data record information, where the user charging data record information is generated by a charging data record information generating device of a first network according to the identifier of the second network to which the mobility management device belongs; and
generating operator network cost information according to the identifier of the second network to which the mobility management device belongs and an identifier of the first network.

The operator network cost information is used to instruct a home public land mobile network HPLMN operator of a user to pay an operator corresponding to the current serving first network and an operator of the second network to which the mobility management device belongs respectively.

The first network and the second network are different networks. The identifier of the first network includes but not limited to a public land mobile network PLMN identifier of the first network, and the identifier of the second network includes but not limited to a PLMN identifier of the second network.

Specifically, the charging device further includes components such as a memory, a bus, and a hard disk in addition to the processor, where the processor is respectively connected to the memory and the hard disk through the bus.

In the embodiment of the present invention, a charging data record information generating device adds an identifier of a second network to which a mobility management device belongs to user charging data record information, and sends the user charging data record information to a charging device, so that the charging device can perform inter-network cost settlement between the second network to which the mobility management device belongs and a current serving first network according to the user charging data record information that includes the identifier of the second network to which the mobility management device belongs. This solves a problem that, when a radio access network is shared, inter-network cost settlement between different network operators cannot be performed based on user charging data record information generated by an existing charging data record information generating device and does not include the identifier of the second network to which the mobility management device belongs, and losses of benefits of some operators may be caused.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and the parts displayed as units may or may not be physical units, may be located in one position, or may be distributed on a plurality of network units. A part of or all of the units may be selected according to actual needs to achieve the objectives of the solutions of the embodiments.

In addition, functional units in the embodiments of the present invention may be integrated into one processing unit, or each of the units may exist alone physically, or two or more units may be integrated into one unit. The integrated unit may be implemented in a form of hardware, or may be implemented in a form of hardware plus a software functional unit.

The integrated unit implemented in a form of software functional unit may be stored in a computer readable storage medium. The software functional unit is stored in a storage medium and includes several instructions for instructing a computer device (which may be a personal computer, a server, a network device, or the like) to perform a part of the steps of the methods described in the embodiments of the present invention. The storage medium includes: any mediums that can store program codes, such as a removable hard disk, a read-only memory (Read-Only Memory, ROM for short), a random access memory (Random Access Memory, RAM for short), a magnetic disk, or an optical disc.

Finally, it should be noted that the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, as long as such modifications and replacements do not cause the essence of corresponding technical solutions to depart from the scope of the technical solutions of the embodiments of the present invention.

## Claims

1. A charging information processing method, comprising:
receiving, by a charging data record information generating device of a first network, an identifier of a second network to which a mobility management device belongs, wherein the first network and the second network are different networks; and
generating, by the charging data record information generating device, user charging data record information, wherein the user charging data record information comprises the identifier of the second network.

2. The method according to claim 1, wherein the receiving, by a charging data record information generating device, an identifier of a second network to which a mobility management device belongs comprises:
receiving, by the charging data record information generating device, a request message sent by the mobility management device, wherein the request message comprises the identifier of the second network to which the mobility management device belongs.

3. The method according to claim 2, wherein the request message comprises at least one of a location update request message, a service request message, a create session request message, and a modify bearer request.

4. The method according to any one of claims 1 to 3, wherein the identifier of the second network comprises at least one of a PLMN identifier of the second network, a cell identifier of the second network, and an identifier of the mobility management device.

5. The method according to any one of claims 1 to 3, wherein the charging data record information generating device comprises at least one of a mobile service switching center server MSC Server, a serving general packet radio service support node SGSN, a gateway general packet radio service support node GGSN, a serving gateway SGW, a packet data network gateway PGW, and a mobility management entity MME.

6. The method according to any one of claims 1 to 3, wherein the mobility management device comprises at least one of a mobility management entity MME and a serving general packet radio service support node SGSN.

7. A charging data record information generating device, located on a first network and comprising:
a receiving module, configured to receive an identifier of a second network to which a mobility management device belongs, wherein the first network to which the charging data record information generating device belongs and the second network are different networks; and
a user charging data record information generating module, configured to generate user charging data record information according to the identifier of the second network received by the receiving module, wherein the user charging data record information comprises the identifier of the second network.

8. The charging data record information generating device according to claim 7, wherein the receiving module is specifically configured to receive a request message sent by the mobility management device, wherein the request message comprises the identifier of the second network to which the mobility management device belongs.

9. The charging data record information generating device according to claim 8, wherein the request message comprises at least one of a location update request message, a service request message, a create session request message, and a modify bearer request.

10. The charging data record information generating device according to any one of claims 7 to 9, wherein the identifier of the second network comprises at least one of a PLMN identifier of the second network, a cell identifier of the second network, and an identifier of the mobility management device.

11. The charging data record information generating device according to any one of claims 7 to 9, wherein the charging data record information generating device comprises at least one of a mobile service switching center server MSC Server, a serving general packet radio service support node SGSN, a gateway general packet radio service support node GGSN a serving gateway SGW, a packet data network gateway PGW, and a mobility management entity MME.

12. A charging information processing method, comprising:
receiving user charging data record information which is generated by a charging data record information generating device of a first network according to an identifier of a second network to which a mobility management device belongs; obtaining an identifier of the second network according to the user charging data record information, wherein the first network and the second network are different networks; and generating operator network cost information according to the identifier of the second network and an identifier of the first network.

13. The method according to claim 12, wherein the operator network cost information is used to instruct a home public land mobile network HPLMN operator of a user to pay an operator corresponding to the first network and an operator of the second network to which the mobility management device belongs respectively.

14. The method according to claim 12 or 13, wherein the identifier of the second network comprises at least one of a PLMN identifier of the second network, a cell identifier of the second network, and an identifier of the mobility management device.

15. A charging device, comprising:
an obtaining module, configured to receive user charging data record information which is generated by a charging data record information generating device of a first network according to an identifier of a second network to which a mobility management device belongs, and obtain the identifier of the second network according to the user charging data record information, wherein the first network and the second network are different networks; and
an operator network cost information generating module, configured to generate operator network cost information according to the identifier of the second network to which the mobility management device belongs, which is obtained by the obtaining module and an identifier of the first network.

16. The charging device according to claim 15, wherein the operator network cost information is used to instruct a home public land mobile network HPLMN operator of a user to pay an operator corresponding to the first network and an operator of the second network to which the mobility management device belongs respectively.

17. The charging device according to claim 15 or 16, wherein the identifier of the second network comprises at least one of a PLMN identifier of the second network, a cell identifier of the second network, and an identifier of the mobility management device.

18. A charging information processing system, comprising:
the charging data record information generating device according to any one of claims 7 to 11; and
the charging device according to any one of claims 15 to 17.

19. The charging information processing system according to claim 18, further comprising:
a mobility management device, configured to send a request message to the charging data record information generating device, wherein the request message comprises an identifier of a second network to which the mobility management device belongs.
